# EUROPÄISCHE PATENTSCHRIFT

(11) **EP 0 320 761 B1**
(45) Veröffentlichungstag und Bekanntmachung des Hinweises auf die Patenterteilung: **26.03.1997**
(21) Anmeldenummer: 88120386.3
(22) Anmeldetag: 07.12.1988
(51) Int. Cl.: C08K 5/50, C08G 18/42

(54) **Verwendung von Phosphanen und/oder Diphosphanen bei der Herstellung von Kunststoffen auf Isocyanatbasis**
Use of phosphanes and/or diphosphanes in the preparation of polymers on an isocyanate basis
Utilisation de phosphanes et/ou diphosphanes pour la préparation de polymères à partir d'isocyanates

(30) Priorität: 18.12.1987 DE 3742986
(43) Veröffentlichungstag der Anmeldung: 21.06.1989
(73) Patentinhaber: BAYER AG, 51368 Leverkusen (DE)
(72) Erfinder: Haas, Peter, Dr., D-5657 Haan (DE); Hettel, Hans, Dr., D-5064 Rösrath (DE)

(56) Entgegenhaltungen:
- EP-A- 0 174 174
- EP-A- 0 264 262
- DE-A- 2 231 069
- US-A- 3 230 193
- E.Schmidt, Textilveredelung, 1982, 17, Nr. 6, S. 254-257
- W.H. Hemmpel, Textil Praxis International, 1983, März, S. 261-264
- K.C. Smeltz, Textile Chemist and Colorist, 1983, 15, Nr. 4, S. 52/17 - 56/21.

## Beschreibung

Polyurethanschaumstoffe niedriger Rohdichte neigen wegen der hohen Exothermie bei großen Wassermengen durch die starke Treibreaktion zur Kernverfärbung.

Gegen diese temperaturbedingte Verfärbungsreaktion sind eine Reihe von Stabilisatoren literaturbekannt.

Als erste große Gruppe sind hier sterisch gehinderte Phenole, aber auch aromatische Amine, Piperidine, die verschiedenartigsten Ester der phosphorigen Säuren sowie Phenothiazine und Phenothiazinderivate zu nennen.

Jede dieser Substanzklassen besitzt gewisse Nachteile.

So zeigen die sterisch gehinderten Phenole eine durch verschiedene Faktoren begünstigte Vergilbungsreaktion, hauptsächlich bedingt durch Reaktionen in der Paraposition des Aromaten zu Nitro-, Nitroso- sowie deren Folgeprodukten (vgl. KC. Smeltz, Textile Chemist and Colorist, April 83, Vol. 15, Nr. 4, E. Schmidt, Textilveredelung 17 (1983), Nr. 6. H.-W. Hemmpel, Textil Praxis International 1983, Ausgabe März/April).

Phenothiazine und deren Derivate sind sehr wirksam, zeigen jedoch eine nicht gewünschte Eigenfarbe.

Eine weitere große Stabilisator-Gruppe sind die Phsophorigsäureester. Ihr Nachteil ist die Hydrolyseanfälligkeit bei an sich guter Antikernverfärbungswirkung.

Es ist daher nicht an Versuchen gefehlt, den hydrolytischen Abbau dieser Ester zu verhindern. Dies ist selbst bei aromatischen Estern jedoch nicht möglich, die noch stark substituiert sind. Sowohl der Polyurethanschaum als auch die Produktionsstätte riechen stark nach den phenolischen Hydrolyseprodukten.

Besonders nachteilig bei den Polyurethanesterschaumstoffen ist die Bildung der phosphorigen Säure, die eine autokatalytische Zersetzung in den Estersegmenten einleitet.

Dies führt namentlich unter Bedingungen einer Feuchtealterung zu einem schnellen Abbau des Polymergerüstes. Die Verwendung von Estern der phosphorigen Säure in der Regel mit einer Kombination weiterer Antioxidantien als Synergisten ist z.B. beschrieben in:

DE-OS 2 848 922, US-PS 4 135 042, DE-OS 2 905 808, DDR-PS 135 208, JA 52 128 996, JA 52 093 463, DE-OS 2 412 708, DE-OS 2 231 069, GB-PS 1 027 057, BE 646 355, DDR-PS 146 959, DDR-PS 146 961, DE-OS 2 945 855, US-PS 3459 837, US-PS 3 354 241.

In diesen Veröffentlichungen sind indessen immer Kombinations-Antikernverfärbungsausrüstungen genannt, die die schon beschriebenen Nachteile
- Bildung additivspezifischer Chromophore
- Eigenfarbe der Phenothiazine
- Hydrolyse der Phosphorigsäureester
aufweisen.

Namentlich für die Herstellung von Polyurethanpolyesterschaumstoffen mit textilen Anwendungen werden hier besonders hohe Anforderungen gestellt, da es infolge von Vergilbungen sowohl zur Diffusion der Chromophore in die Textilien, als auch zu Polymerschädigung durch Abbauprodukte kommen kann.

Zwar werden in der DE-OS 2 231 069 neben den Phosphiten auch Phosphine - nach neuer Nomenklatur Phosphane - und Sulfide in Kombination mit sterisch gehinderten Phenolen genannt, ohne daß die hiermit verbundenen Nachteile erkannt wurden.

Überraschenderweise wurde nun gefunden, daß Phosphane und Diphosphane der Formel 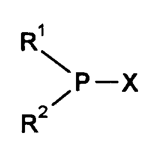 in der
- R¹ und R²: gleich oder verschieden sind und einen C₂- bis C₁₄-Alkyl-, C₄- bis C₁₄-cycloalkyl- oder einen C₆- bis C₁₀-Arylrest bedeuten, und
- X: gleich R¹ oder R² ist oder die Gruppierung 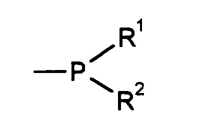 mit den bereits genannten Bedeutungen für R¹ und R² darstellt,
schon alleine eine hervorragende Wirkung als hydrolysenfeste Antikernverfärbungsmittel aufweisen, wobei als Polyolkomponente Polymerpolyol-Dispersionen ausgeschlossen sind.

Gegenstand der Erfindung ist die Verwendung von Phosphanen und/oder Diphosphanen der obengenannten allgemeinen Formel als alleinige Antikernverfärbungsmittel bei der Herstellung von Schaumstoffen auf Isocyanatbasis, wobei als Polyolkomponente Polymerpolyol-Dispersionen ausgeschlossen sind.

Die Herstellung dieser Verbindungen ist an sich bekannt.

Erfindungsgemäß ist bevorzugt, daß die Phosphane und/oder Diphosphane in einer Menge von 0,01 bis 5 Gew.-%, insbesondere in einer Menge von 0,05 bis 1 Gew.-%, bezogen auf den Schaumstoff auf Isocyanatbasis, eingesetzt werden.

Als erfindungsgemäß zu verwendende Verbindungen seien genannt: 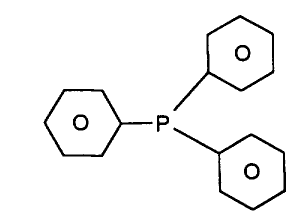 bevorzugt

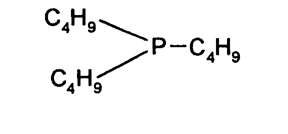

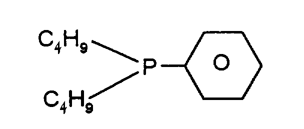

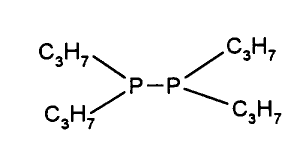

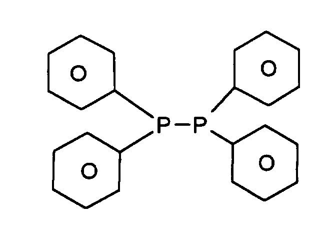

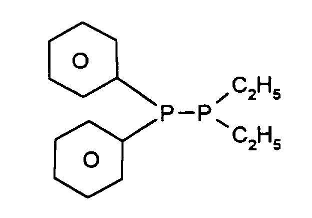

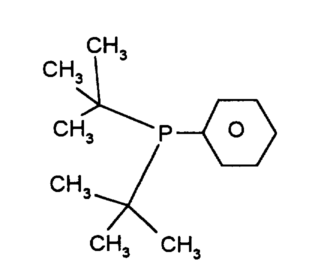

Die erfindungsgemäße Antikernverfärbungsstabilisierung erbringt gewerbehygienisch für die Polyesterpolyurethanhersteller enorme Vorteile, da die hergestellten Schaumstoffe, mithin auch die Produktionsgebäude, den Geruch nach Phenolen oder Kresolen nicht mehr zeigen. Die mit Arylphosphanen hergestellten Schaumstoffe sind demgegenüber praktisch geruchsfrei und zeigen keine, durch die Stabilisatoren bedingte Verschlechterung des Feuchtealterungsverhaltens mehr.

Die Herstellung von Schaumstoffen auf Isocyanatbasis ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag München 1966, sowie in der Neuauflage dieses Buches, herausgegeben von G. Oertel, Carl Hanser Verlag München, Wien 1983, beschrieben.

Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt:
1. Alle Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   - n: 2 bis 4, vorzugsweise 2 bis 3,
   und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z.B. solche Polyisocyanate, wie sie in der DE-OS 2 832 253, Seiten 10 bis 11, beschrieben werden.

   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2. Ausgangskomponenten sind ferner Verbindungen mit mindestens zwei gegenüber Isocyanaten reaktionsfähigen Wasserstoffatomen von einem Molekulargewicht in der Regel von 400 bis 10 000. Hierunter versteht man neben Aminogruppen, Thiogruppen oder Carboxylgruppen aufweisende Verbindungen, insbesondere 2 bis 8 Hydroxylgruppen aufweisende Verbindungen, speziell solche vom Molekulargewicht 1 000 bis 6 000, vorzugsweise 2 000 bis 6 000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 2 832 253, Seiten 11 bis 18, beschrieben werden. Die mindestens zwei Hydroxylgruppen aufweisenden Polyester sind erfindungsgemäß bevorzugt.
3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 bis 20, beschrieben.
4. Wasser und/oder leicht flüchtige organische Substanzen als Treibmittel.
5. Gegebenenfalls werden Hilfs- und Zusatzmittel mitverwendet wie
   a) Katalysatoren der an sich bekannten Art,
   b) oberflächenaktive Zusatzstoffe, wie Emulgatoren und Schaumstabilisatoren,
   c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21 bis 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Erfindungsgemäß lassen sich auch kalthärtende Schaumstoffe herstellen (vgl. GB-PS 1 162 517, DE-OS 2 153 086).

Selbstverständlich können aber auch Schaumstoffe durch Blockverschäumung oder nach dem an sich bekannten Doppeltransportbandverfahren hergestellt werden.

Polyisocyanuratschaumstoffe werden nach den hierfür bekannten Verfahren hergestellt.

Die nach der Erfindung erhältlichen Produkte finden z.B. folgende Anwendung: Möbelpolsterungen, Textileinlagen, Matratzen, Automobilsitze, Armlehnen, Schwämme und Bauelemente, sowie Sitz- und Armaturverkleidungen.

Die Wirkung der Alkyl- oder Arylphosphane oder Diphosphanen ist insofern überraschend, als diese Verbindungsklassen entgegen bisheriger Meinung als alleinige Antikernverfärbungsstabilisatoren wirksam sind, wobei als Polyolkomponente Polymerpolyol-Dispersionen ausgeschlossen sind.

### Ausführungsbeispiele

### Beispiel 1

Auf einer handelsüblichen UBT-Verschäumungsanlage wird ein Reaktionsgemisch bestehend aus
- 75,0 Gew.-Teilen: eines teilverzweigten Polyesters einer OH-Zahl von 60 auf der Basis von Adipinsäure, Diethylenglykol und Trimethylolpropan,
- 25,0 Gew.-Teilen: eines teilverzweigten Polyesters einer OH-Zahl von 210 auf der Basis von Adipinsäure, Phthalsäure, Trimethylolpropan und Propylenglykol,
- 5,5 Gew.-Teilen: Wasser
- 1,0 Gew.-Teil: eines Stabilisators (alkoxyliertes Nonylphenol der OH-Zahl 70)
- 1,5 Gew.-Teilen: eines tert.-Amin-Aktivators (Desmorapid® DB, Bayer AG)
- 1,0 Gew.-Teilen: des Stabilisators SE 232 der BP (Silikonbasis)
- 70,8 Gew.-Teilen: eines Gemischs, bestehend zu 50 Gew.-% aus einem Gemisch aus 80 Gew.-% 2,4- und 20 Gew.-% 2,6-Toluylendiisocyanat und zu 50 Gew.-% aus einem Gemisch aus 65 Gew.-% 2,4- und 35 Gew.-% 2,6-Toluylendiisocyanat
zu einem Block der Höhe 50 cm, Länge 200 cm und Breite 120 cm verschäumt.

Die Rohdichte des resultierenden Polyurethan-Schaumstoffes beträgt 20 kg/m³.

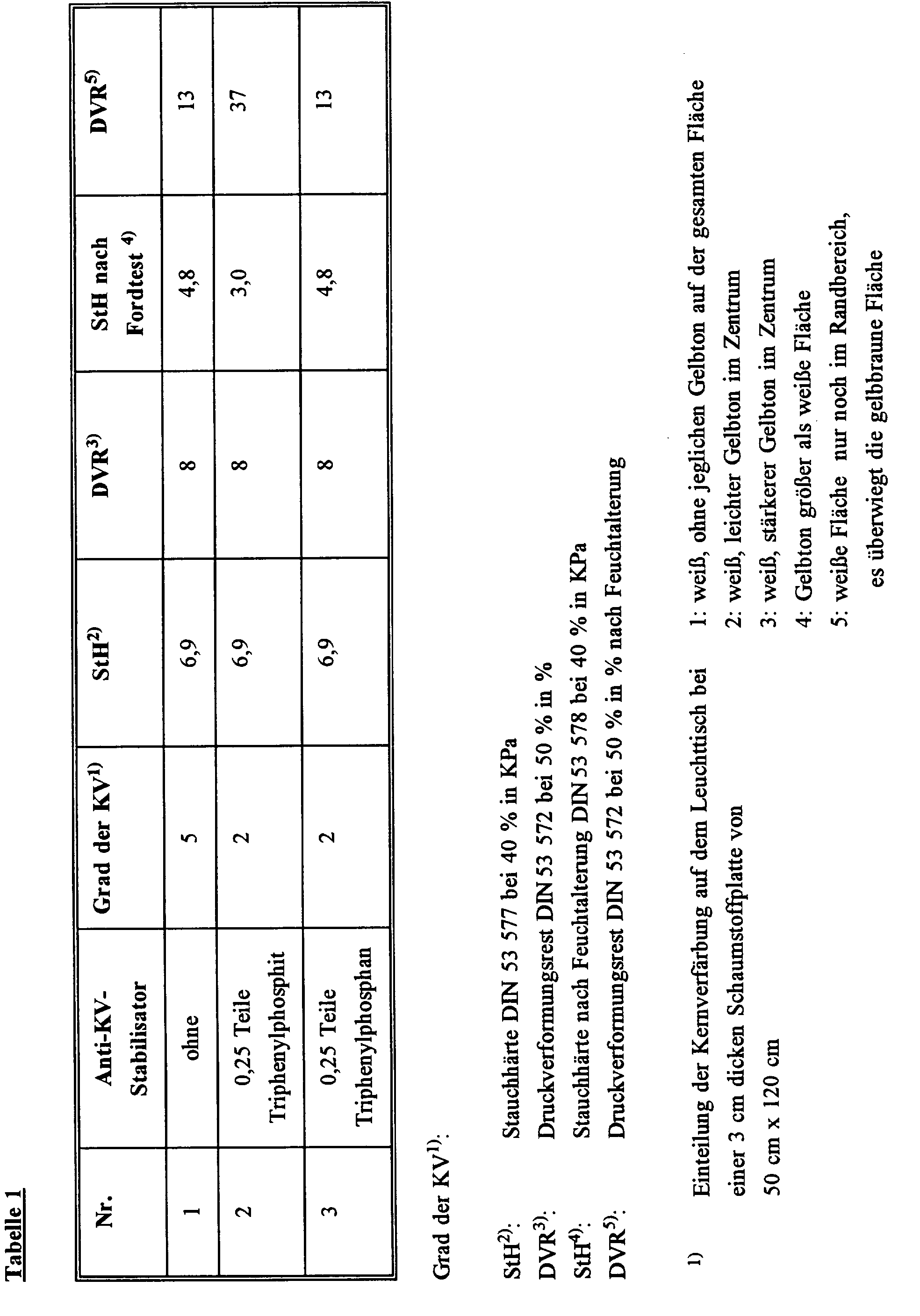

### Beispiel 2

Die Feuchtalterung wurde auch an einem Polyurethan-Schaumstoff einer Rohdichte von 62 kg/m³ untersucht, der nach folgender Rezeptur erhalten wurde:
- 100 Gew.-Teile: eines Polyesters der OH-Zahl 60 gemäß Beispiel 1,
- 1,65 Gew.-Teile: Wasser
- 0,85 Gew.-Teile: des Schaumstabilisators B 5055 (Silikonbasis) (Goldschmidt AG)
- 0,20 Gew.-Teile: Amin-Aktivator RC A117 (Rhein-Chemie, Mannheim)
- 0,50 Gew.-Teile: Dimethylethanolamin
werden gemäß Beispiel 1 mit
- 27 Gew.-Teile: des Polyisocyanatgemisches gemäß Beispiel 1 zu einem Schaumstoffblock verschäumt.

| Nr. | Stabilisierung | StH²⁾ | DVR³⁾ | StH nach Fordtest ⁴⁾ | DVR nach Fordtest ⁵⁾ |
|---|---|---|---|---|---|
| 1 | ohne | 7,5 | 2,6 | 5,2 | 4,5 |
| 2 | 0,25 Gew.-Teile Triphenylphosphit | 7,5 | 2,7 | zerstört | - |
| 3 | 0,25 Gew.-Teile Triphenylphosphan | 7,6 | 2,8 | 5,0 | 5,0 |

Zur Beurteilung des thermischen Alterungsverhaltens wurden die Probekörper der Größe 5 x 5 x 8 cm vor dem Fordtest in einem Umlufttrockenschrank für 5 Stunden auf 175°C erhitzt.

Ergebisse der thermischen Behandlung von Probekörpern aus Beispiel 2:

| Nr. | Ausgangsfarbe | Farbe nach Thermoalterung | Farbe nach Fordtest |
|---|---|---|---|
| 1 | weiß | gelb | gelbbraun |
| 2 | weiß | gelb | dunkelbraun |
| 3 | weiß | weiß | gelb |

Aus diesen Beispielen geht hervor, daß die erfindungsgemäßen Verbindungen vom Typ der Phosphane und Diphosphane gut wirksame alleinige Antikernverfärbungsstabilisatoren darstellen, die ohne Nachteil für das Feuchtalterungsverhalten sind. Zudem beeinflussen sie das thermische Alterungsverhalten positiv.

Während eine 0,25 %ige Lösung von Triphenylphosphit in Polyesterpolyolen nach 6 Monaten bereits zu ca. 50 % hydrolysiert ist, zeigt die entsprechende Triphenylphosphan-Lösung keinen Wirkstoffabfall.

Noch gravierender ist dies unter erhöhten Temperaturbedingungen. So sind nach 2 Monaten Lagerung bei 80°C nur noch 50 % der Triphenylphosphit-Ausgangsmenge vorhanden.

Auch in Polyurethanpolyetherschaumstoffen ist der erfindungsgemäße Stabilisator wirksam. Von Vorteil ist hier, daß auf die zu Vergilbungsreaktionen neigende Stoffgruppe der sterisch gehinderten Phenole als Stabilisatorkomponente verzichtet werden kann.

Als Beispiel sei ein nur mit 0,2 Gew.-% Triphenylphosphan stabilisiertes Polyetherpolyol auf der Basis Trimethylpropan mit 15 Gew.-% Ethylenoxid und 85 Gew.-% Propylenoxid als Aufbaukomponenten mit einer OH-Zahl von 45 herangezogen, das zum Erreichen einer hohen Temperatur als 10facher Ansatz der nachstehenden Rezeptur in einer Kiste der Kantenlänge von jeweils 45 cm verschäumt wurde:
- 100 Gew.-Teile: Polyol, stabilisiert mit 0,2 % Triphenylphosphan, OH-Zahl 45
- 5 Gew.-Teile: Wasser
- 0,18 Gew.-Teile: Zinnoctoat
- 1,4 Gew.-Teile: Stabilisator OS 22 (Siliconbasis) (Bayer AG)
- 0,2 Gew.-Teile: Aminaktivator PS 207 (Bayer AG)
- 60 Gew.-Teile: eines Gemisches aus 80 Gew.-% 2,4- und 20 Gew.-% 2,6-Toluylendiisocyanat

Der Schaumstoff wurde anschließend für 20 Minuten bei 100°C nachgeheizt.

Nach dem Aufschneiden ergab sich in der Schaumstoffmitte keine Verfärbung.

Der Luftwiderstand (Offenzelligkeit) beträgt 90 mm Wassersäule.

## Patentansprüche

1. Verwendung von Phosphanen und/oder Diphosphanen der allgemeinen Formel 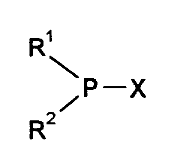 in der
R¹ und R² gleich oder verschieden sind und einen C₂- bis C₁₄-Alkyl-, C₄- bis C₁₄-cycloalkyl- oder einen C₆- bis C₁₀-Arylrest bedeuten, und
X gleich R¹ oder R² ist oder die Gruppierung 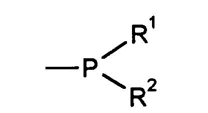 mit den bereits genannten Bedeutungen für R¹ und R² darstellt,
bei der Herstellung von Schaumstoffen auf Isocyanatbasis, wobei als Polyolkomponente Polymerpolyol-Dispersionen ausgeschlossen sind, als alleinige Antikernverfärbüngsmittel.

2. Verwendung von Triphenylphosphan gemäß Anspruch 1 bei der Herstellung von Schaumstoffen auf Isocyanatbasis.

3. Verwendung von Tetraphenyl-diphosphan gemäß Anspruch 1 bei der Herstellung von Schaumstoffen auf Isocyanatbasis.

4. Verwendung gemäß Anspruch 1 bis 3 dadurch gekennzeichnet, daß die Phosphane und/oder Diphosphane in einer Menge von 0,01 bis 5 %, bezogen auf den Schaumstoff auf Isocyanatbasis eingesetzt werden.

## Claims

1. Use of phosphanes and/or diphosphanes of the general formula 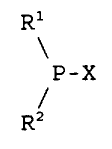 in which
R¹ and R² are identical or different and mean a C₂ to C₁₄ alkyl, C₄ to C₁₄ cycloalkyl or a C₆ to C₁₀ aryl residue and
X is identical to R¹ or R² or represents the group 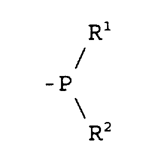 with R¹ and R² having the above-stated meanings,
in the production of isocyanate-based foam as the sole core anti-discoloration agent, wherein polymeric polyol dispersions are excluded as the polyol component.

2. Use of triphenylphosphane according to claim 1 in the production of isocyanate-based foams.

3. Use of tetraphenyldiphosphane according to claim 1 in the production of isocyanate-based foams.

4. Use according to claims 1 to 3, characterised in that the phosphanes and/or diphosphanes are used in a quantity of 0.01 to 5%, relative to the isocyanate-based foam.

## Revendications

1. Utilisation de phosphanes et/ou de diphosphanes de formule générale 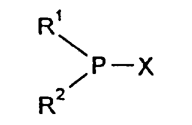 dans laquelle
R¹ et R² sont identiques ou différents et représentent un radical alkyle en C₂ C₁₄, un radical cycloalkyle en C₄ C₁₄, ou un radical aryle en C₆ C₁₀, et
X est identique à R¹ ou R² ou représente le groupement 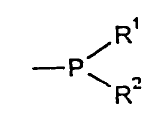 avec les significations déjà mentionnées pour R¹ et R²,
lors de la préparation de mousses à base d'isocyanates, des dispersions de polyols polymères étant exclues en tant que composant de polyol, comme agent exclusif s'opposant au changement de couleur au centre.

2. Utilisation de triphényldiphosphane selon la revendication 1, lors de la préparation de mousses à base d'isocyanates.

3. Utilisation de tétraphényldiphosphane selon la revendication 1, lors de la préparation de mousses à base d'isocyanates.

4. Utilisation selon les revendications 1 à 3, caractérisée en ce que les phosphanes et/ou les diphosphanes sont mis en oeuvre en une quantité de 0,01 à 5 %, rapportés à la mousse à base d'isocyanates.
